# FASCICULE DE BREVET EUROPEEN

(11) **EP 3 475 141 B1**
(45) Date de publication et mention de la délivrance du brevet: **11.09.2024**
(21) Numéro de dépôt: 17742472.8
(22) Date de dépôt: 19.06.2017
(51) Int. Cl.: B61H 5/00, F16D 65/092

(54) **ENSEMBLE DE PLAQUETTES DE FREIN**
BREMSBELAG
BRAKE PAD ASSEMBLY

(30) Priorité: 24.06.2016 DE 202016103354 U
(43) Date de publication de la demande: 01.05.2019
(73) Titulaire: ALSTOM FLERTEX SAS, 92230 Gennevilliers (FR)
(72) Inventeur: HENRION, Michèle, 75017 Paris (FR); GUILLET-REVOL, Eric, 92500 Rueil-Malmaison (FR); MAS, Pauline, 92110 Clichy (FR); GUILLARD, François, 95100 Aregenteuil (FR)
(74) Mandataire: Schmidt, Martin Peter
(86) Numéro de dépôt international: PCT/FR2017/051595
(87) Numéro de publication internationale: WO 2018/002472

(56) Documents cités:
- EP-A1- 0 428 191
- EP-A1- 0 619 439
- EP-A2- 0 263 752
- WO-A1-2016/038135
- CN-U- 201 661 634
- CN-U- 203 146 655
- DE-A1- 102014 113 058
- DE-A1- 102015 109 033
- DE-U1- 20 205 315
- DE-U1- 8 514 607

## Description

La présente invention concerne un ensemble de plaquettes de frein pour des freins à disques, en particulier dans des véhicules ferroviaires, du type comprenant une platine principale, des modules de plaquette fixés sur la platine, reposant respectivement sur un diaphragme, lesquels modules de plaquette présentent une garniture de friction et une plaque d'appui, cette garniture de friction étant fixée sur la plaque d'appui, des moyens de fixation d'un module de plaquette respectif sur la platine, une pluralité de douilles, chaque moyen de fixation étant disposé dans une douille respective, laquelle est insérée dans des orifices ménagés mutuellement en regard dans la plaque d'appui et dans la platine principale, au travers d'une ouverture de la garniture de friction, qui présente un diamètre plus grand que les orifices ménagés mutuellement en regard.

Les ensembles de plaquettes de frein présentent une structure de type segmenté, dans lesquels chaque module de plaquette est relié en soi à la platine principale de telle manière que les divers modules de plaquette peuvent exécuter indépendamment les uns des autres des déplacements limités quand l'ensemble de plaquettes de frein est pressé en fonctionnement contre le disque de frein. Cela est nécessaire, car lors de l'opération de freinage, le côté du disque de frein, contre lequel l'ensemble de plaquettes de frein est pressé, est par nature sensiblement plus chaud que le côté opposé du disque de frein. Il en résulte une dilatation thermique plus importante sur un côté que sur l'autre. Ainsi apparaît lors de l'opération de freinage un bombement (blindage) du disque de frein respectif. Du fait de la structure décrite à l'instant de l'ensemble de plaquettes de frein, les divers modules de plaquettes peuvent, grâce à leur mobilité limitée, suivre la variation de surface, liée au réchauffement, du disque de frein.

Un élément essentiel d'un ensemble de plaquettes de frein selon l'invention est le type de liaison ou de fixation des divers modules de plaquette à la platine principale.

On connaît déjà des documents antérieurs, dans lesquels une douille s'étend au moins partiellement dans un alésage de la platine, cette douille étant reliée à un moyen de fixation entre la platine de support et le module de plaquettes. On citera tout d'abord EP 0 619 439 et DE 10 2015 109 033.

En particulier un ensemble de plaquettes de frein du type précité est connu de WO 2016/038135, dont l'enseignement est identique à celui de DE 10 2014 113058, dans lequel une douille est insérée dans des orifices, ménagés mutuellement en regard dans la garniture de friction, la plaque d'appui et la platine principale. Cette douille est insérée depuis le côté, opposé au module de plaquette, de la platine principale dans lesdits orifices et elle repose par un bord de type bride sur un renfoncement de forme annulaire pratiqué dans la platine principale, lequel entoure l'ouverture. La douille est pourvue d'un filetage intérieur, dans lequel est vissée, au travers de l'ouverture de la garniture de friction, une vis qui repose, par sa tête de vis, dans l'ouverture de garniture de friction sur la plaque d'appui.

Selon une variante, un boulon est inséré dans le manchon à travers l'ouverture de garniture de friction. Ce boulon dispose, au niveau de son extrémité introduite dans la douille, d'une rainure annulaire pourvue d'un anneau élastique inséré dans cette dernière. Cet anneau s'enclenche, lors de l'introduction du boulon, dans une rainure annulaire correspondante dans le côté intérieur de la douille.

Dans les deux alternatives prévues dans ce document, des moyens de production considérables sont requis, concernant d'une part la douille et d'autre le boulon ou la vis.

La douille doit protéger le moyen de liaison à proprement parler contre des forces de cisaillement, apparaissant lors de l'opération de freinage.

Dans le cas de l'ensemble de plaquettes de frein connu de WO 2016/038135, les diaphragmes sont disposés de telle sorte qu'ils prennent appui, par leur périphérie plus grande, sur la plaque d'appui et, par leur périphérie plus petite, dans des épaulements annulaires formés de manière correspondante dans la platine principale. De ce fait, la fabrication de la platine principale est également coûteuse.

On connaît en outre, par DE 202 05 315, une plaquette de frein comportant une platine de support ainsi que plusieurs éléments de friction. La fixation mutuelle, entre cette platine et ces éléments, est réalisée par vissage.

Enfin on connaît, par CN 2016 61634, un ensemble de plaquettes de frein, dont la platine principale et la plaque d'appui sont liées par un rivet. Ce dernier s'étend à l'intérieur d'une douille, elle-même logée dans un trou traversant de la platine principale. Ce trou traversant délimite un lamage de plus grand diamètre, sur la face opposée à la plaque d'appui.

Par voie de conséquence, la présente invention a pour objectif de réaliser un ensemble de plaquettes de frein du type précité, dans lequel la liaison entre le module de plaquette et la platine principale présente une structure aussi simple que possible, tout en étant toutefois fiable.

La présente invention atteint cet objectif par un ensemble de plaquettes de frein du type précité, plus spécifiquement avec les caractéristiques décrites dans la revendication 1.

La douille est insérée, conformément à l'invention, au travers de l'ouverture de la garniture de friction, de l'ouverture de la plaque d'appui jusque dans le trou borgne dans la platine principale. Le rivet est introduit à travers l'alésage reliant le trou borgne au côté extérieur de la platine principale, l'opération de rivetage à proprement parler étant réalisée par la suite.

On notera que les douilles, décrites dans les documents commentés ci-dessus, traversent entièrement la plaque de base. Dans ces conditions, même si un homme du métier venait à associer une de ces douilles avec un rivet, il n'obtiendrait pas la combinaison d'un trou borgne et d'un alésage de plus petit diamètre, destiné à la réception du rivet.

Selon un mode de réalisation avantageux de l'invention, il est prévu que la douille présente, au niveau de l'une de ses extrémités, un bord de type bride, qui repose, dans l'ouverture de la garniture de friction, sur la plaque d'appui quand la douille est insérée dans le trou borgne de la platine principale, le diamètre intérieur entouré par la bride étant plus grand que le diamètre intérieur de la douille de sorte qu'est formé entre la bride et la douille un épaulement qui forme la butée pour la tête de fermeture du rivet, tandis que la tête de pose du rivet se trouve enfoncée dans la platine principale. La tête de rivet vient ainsi se placer dans l'alignement avec la surface de platine principale, tandis que la tête de fermeture se formant lors de l'opération de rivetage se presse contre l'épaulement dans la zone de bride.

De manière avantageuse, la platine principale est fixée de la même manière avec des rivets au niveau d'un élément de guidage réalisé en queue d'aronde, destiné à être introduit dans le support d'ensemble de plaquettes de frein.

Afin d'empêcher un déplacement de rotation involontaire du module de plaquette respectif lors de l'opération de freinage, il est avantageusement prévu, à distance de l'orifice, recevant la douille, dans la plaque d'appui, un autre orifice servant à recevoir une tige de serrage, qui s'enfonce dans une ouverture, ménagée en regard de l'orifice de plaque d'appui, dans la platine principale.

Afin que la production de platine principale puisse avoir lieu sans complication, il est avantageusement prévu que le diaphragme repose, par son bord le plus grand en périphérie, sur la platine principale et que le bord le plus petit en périphérie prenne appui sur une butée formée dans la plaque d'appui, entourant de manière concentrique l'ouverture de douille. La platine principale dispose ainsi de deux surfaces planes, tandis que les éléments de soutien pour le diaphragme sont déplacés dans la face inférieure de plaque d'appui.

Le type de liaison selon l'invention garantit dans ce cadre la mobilité requise du module de plaquette, qui peut être déplacé par rapport à la platine principale en direction de manière perpendiculaire par rapport au plan de platine principale (direction Z) et qui est configuré de manière mobile par basculement par rapport au plan X-Y.

Les possibilités de déplacement sont néanmoins restreintes par la hauteur de la douille ainsi que la hauteur et la précontrainte du diaphragme.

La présente invention est illustrée et expliquée de manière plus détaillée ci-après à l'aide des figures annexées, dans lesquels :
La figure 1 est une vue avant et arrière d'une moitié d'ensemble de plaquettes de frein composée de deux plaquettes ;
La figure 2 est une vue éclatée de l'ensemble de plaquettes de frein ;
La figure 3 est une coupe des parties de liaison et fonctionnelles de l'ensemble de plaquettes de frein ;
La figure 4 est un détail de la figure 3 représentant les directions de déplacement des modules de plaquette.
La figure 5 est un détail de la figure 3 représentant, à plus grande échelle, le trou borgne et l'alésage ménagés dans la platine de cet ensemble de plaquettes.

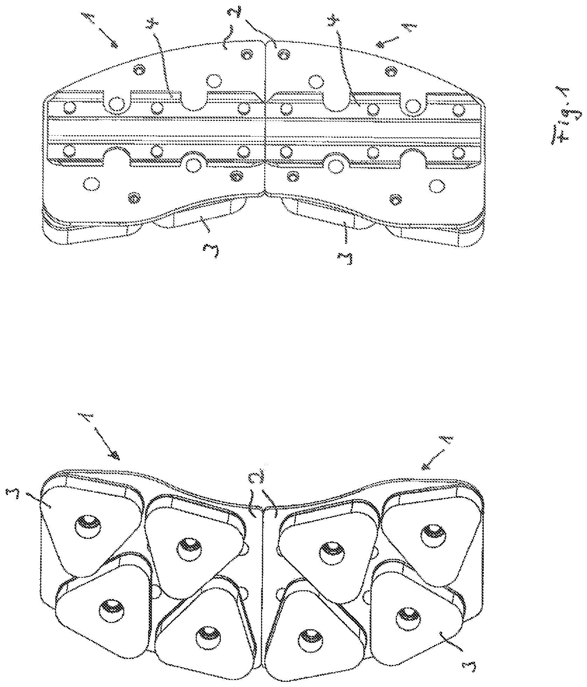

La figure 1 représente une vue avant et arrière d'un ensemble servant à équiper un poste de freinage composé de quatre ensembles de plaquettes de frein individuels et symétriques, l'ensemble de plaquettes de frein respectif étant pourvu du numéro de référence 1. Chaque ensemble de plaquettes de frein 1 se compose d'une platine principale 2, sur laquelle sont disposés, dans le cas présent, respectivement quatre modules de plaquette 3. Des guidages en queue d'aronde 4 sont fixés sur le côté de la platine principale 2, opposé aux modules de plaquette 3.

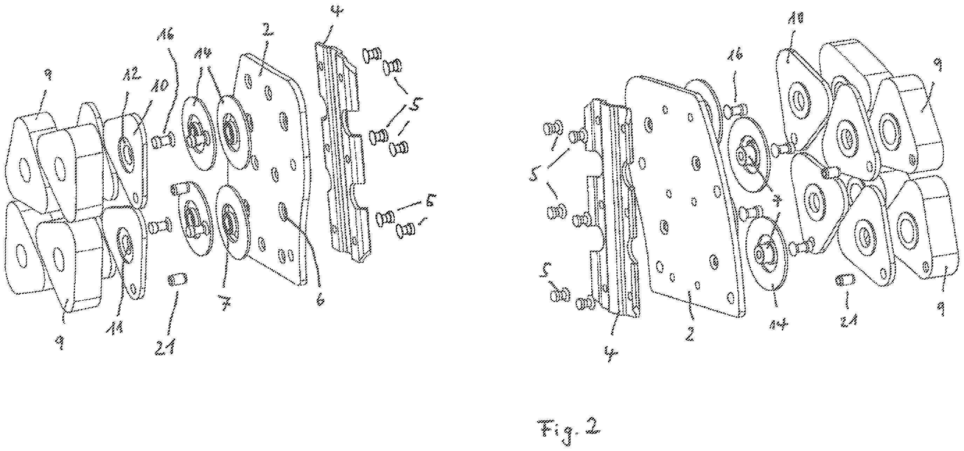

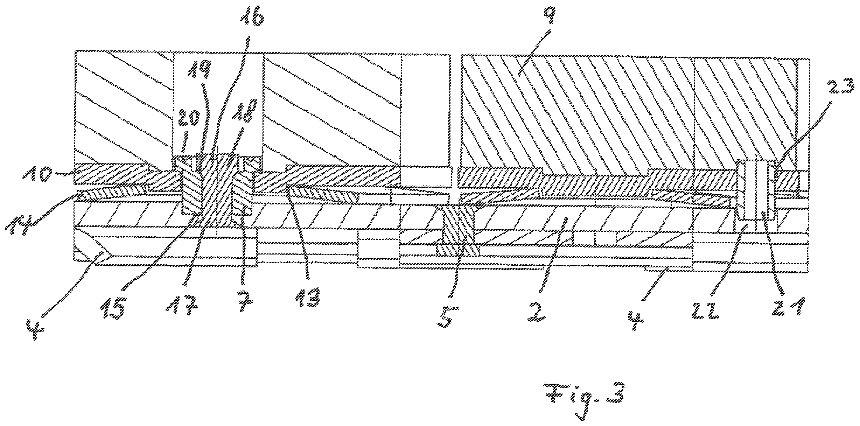

La figure 2 illustre la manière, selon laquelle les modules de plaquette 3 individuels sont fixés sur la platine principale 2 ou bien sont reliés à cette dernière. Les guidages en queue d'aronde 4 sont fixés au moyen de rivets 5 au niveau de la platine principale. Sur le côté de la platine principale 2, opposé au guidage en queue d'aronde, des douilles 7 sont insérées dans des trous borgnes 6. Ces douilles 7 sont introduites, ainsi que cela ressort plus clairement de la figure 3, dans le trou borgne 6 au travers d'une ouverture 8 dans la garniture de friction 9 du module de plaquette 3 et au travers d'un orifice dans la plaque d'appui 10 supportant la garniture de friction 9. L'orifice dans la plaque d'appui 10 est affecté du numéro de référence 11. L'orifice 11 entoure un évidement 12 de forme annulaire, qui est formé par exemple par une opération de pressage de la plaque d'appui 10. Lors de ladite opération de façonnage, un épaulement 13 est formé au niveau du côté opposé de la plaque d'appui 10 avec un décalage parallèle par rapport à l'évidement 12 de forme annulaire, lequel épaulement présente également une forme annulaire et entoure l'orifice 11. L'épaulement 13 annulaire fait office de soutien pour le bord plus petit en périphérie d'un diaphragme 14, dont le bord le plus grand en périphérie repose sur la platine principale 2.

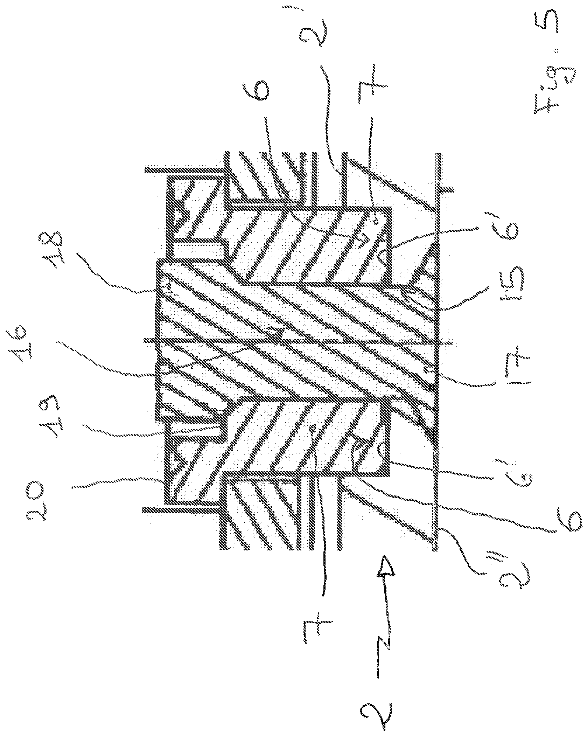

Un alésage 15 s'étend depuis le trou borgne 6, ménagé dans la platine principale 2, à travers la platine principale 2. Comme le montre la figure 5, le trou borgne 6 est destiné à la réception de la douille 7. Il débouche sur la face supérieure 2' de la platine principale 2, à savoir sur la face de cette platine tournée vers la plaque d'appui 10. A partir du fond 6' de ce trou borgne 6, l'alésage 15 précité s'étend vers le bas sur cette figure 5, de manière à déboucher sur la face inférieure 2" de la platine, à savoir sa face opposée à la plaque d'appui 10. Le diamètre de cet alésage 15 est plus petit que celui du trou borgne 6, cet alésage et ce trou borgne étant concentriques, vus de dessus en référence à la figure 5.

Un rivet principal 16 est enfiché par ledit alésage 15 au travers de la douille jusque dans l'ouverture 8 de la garniture de friction, la tête de pose 17 de ce rivet 16 se trouvant enfoncée dans la platine principale 2 de sorte que la surface de ladite tête 17 vient se placer dans l'alignement avec la surface de la platine principale 2.

Par l'opération de rivetage se forme la tête de fermeture 18 du rivet principal 16, laquelle prend appui sur un épaulement 19, qui est disposé dans la zone de la douille 7, qui parvient dans l'ouverture 8 dans la garniture de friction 9. Dans ladite zone, la douille 7 présente un bord 20 de type bride, qui repose dans l'ouverture 8 sur la plaque d'appui 10 quand la douille 7 est insérée dans le trou borgne 6. Le diamètre intérieur entourant le bord 20 de type bride est dans ce cadre plus grand que le diamètre intérieur de la douille 7. La zone de transition entre l'épaulement formé par la bride et la paroi intérieure de la douille 7 est réalisée dans ce cadre avec une extension conique.

Afin d'empêcher une torsion des modules de plaquette 3 individuels autour de ladite liaison par rivetage au rivet principal 16, une tige de serrage 21 est prévue, laquelle est enfilée, au travers d'un orifice 22 dans la platine principale 2, dans un alésage 23, ménagé en regard dudit orifice 22, dans la platine d'appui 10, lequel se prolonge à la manière d'un trou borgne dans la garniture de friction 9, la tige de serrage 21 parvenant dans l'orifice 22 de la platine principale 2 dans l'état enfilé.

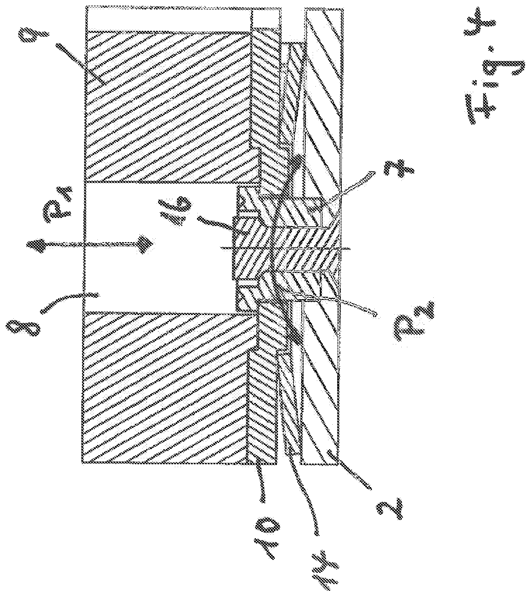

La figure 4 représente un détail de la figure 3, la possibilité du déplacement vertical du module de plaquette 3 à l'encontre de la force du diaphragme 14 étant représentée par la flèche P1, tandis que la flèche P2 indique la possibilité du déplacement par basculement dans le plan X-Y de la platine principale 2.

Ces possibilités de déplacement garantissent que dans le mode de freinage, les modules de plaquette individuels peuvent s'adapter à la surface modifiée du disque de frein.

## Revendications

1. Ensemble de plaquettes de frein (1) pour freins à disques, en particulier dans des véhicules ferroviaires, comprenant une platine principale (2), des modules de plaquette (3) fixés sur la platine, reposant respectivement sur un diaphragme (14), lesquels modules de plaquette présentent une garniture de friction (9) et une plaque d'appui (10), cette garniture de friction étant fixée sur la plaque d'appui (10), des moyens (16) de fixation d'un module de plaquette respectif (3) sur la platine (2), une pluralité de douilles (7), chaque moyen de fixation étant disposé dans une douille (7) respective, laquelle est insérée dans des orifices (11, 6) ménagés mutuellement en regard dans la plaque d'appui (10) et dans la platine principale (2), au travers d'une ouverture (8) de la garniture de friction (9), qui présente un diamètre plus grand que les orifices (6, 11) ménagés mutuellement en regard,
**caractérisé en ce que** l'orifice pour la réception de la douille dans la platine principale est un trou borgne (6) débouchant sur la face (2') de la platine principale (2) tournée vers la plaque d'appui (10),
un alésage (15) de diamètre plus petit que celui du trou borgne (6) étant prévu dans le fond de ce trou borgne, cet alésage (15) traversant la platine principale (2) de manière à déboucher sur la face (2") de la platine opposée à la plaque d'appui,
un rivet (16) étant introduit dans cet alésage à l'intérieur de la douille (7), ce rivet reliant la platine principale (2) et la plaque d'appui (10).

2. Ensemble de plaquettes de frein selon la revendication 1, **caractérisé en ce que** la douille (7) présente, au niveau d'une de ses extrémités, un bord (20) de type bride, qui repose, dans l'ouverture (8) de la garniture de friction (9), sur la plaque d'appui quand la douille (7) est insérée dans le trou borgne (6) dans la platine principale (2), dans lequel le diamètre entouré par la bride (20) est plus grand que le diamètre intérieur de la douille (7) de sorte qu'est formé, entre la bride (20) et la douille (7), un épaulement (19), qui forme la butée pour la tête de fermeture (18) du rivet (16), tandis que la tête de pose (17) du rivet (16) se trouve enfoncée dans la platine principale (2).

3. Ensemble de plaquettes de frein selon la revendication 1 ou 2, **caractérisé en ce que** la platine principale (2) est fixée, au niveau du côté opposé à la garniture de friction (9), au moyen au moins d'un rivet (5), au niveau d'un élément de guidage (4) réalisé en queue d'aronde, destiné à être introduit dans le support de l'ensemble de plaquettes de frein.

4. Ensemble de plaquettes de frein selon l'une quelconque des revendications 1 à 3, **caractérisé en ce qu'**est prévu, à distance de l'orifice (11) recevant la douille (7), dans la plaque d'appui (10), un autre orifice (23) servant à recevoir une tige de serrage (21), qui s'enfonce dans un orifice (22), ménagé en regard de l'orifice de plaque d'appui (23), dans la platine principale (2).

5. Ensemble de plaquettes de frein selon l'une quelconque des revendications 1 à 4, **caractérisé en ce que** le diaphragme (14) repose, par son bord plus grand en périphérie, sur la platine principale (2), et **en ce que** le bord plus petit en périphérie prend appui sur un épaulement (13) de forme annulaire formé dans la plaque d'appui (10), entourant de manière concentrique l'ouverture de douille et est guidé depuis ledit épaulement de manière radiale.

6. Ensemble de plaquettes de frein selon l'une quelconque des revendications 1 à 5, **caractérisé en ce que** chaque module de plaquette (3) est mobile par rapport à la platine principale (2) en direction de manière perpendiculaire par rapport au plan de plaquette principale (direction Z) et est configuré de manière mobile par basculement par rapport au plan X-Y.

## Patentansprüche

1. Satz von Bremsbelägen (1) für Scheibenbremsen, insbesondere in Schienenfahrzeugen, bestehend aus einer Grundplatte (2), auf der Platte befestigten Belagmodulen (3), die jeweils auf einer Membran (14) aufliegen, wobei die Belagmodule einen Reibbelag (9) und eine Trägerplatte (10) aufweisen, wobei dieser Reibbelag auf der Trägerplatte (10) befestigt ist, Mittel (16) zur Befestigung eines Belagmoduls (3) auf der Platte (2), einer Vielzahl von Buchsen (7), wobei jedes Befestigungsmittel in jeweils einer Buchse (7) angeordnet ist, die in in der Trägerplatte (10) und in der Grundplatte (2) vorgesehenen einander zugewandten Öffnungen (11, 6) durch eine Öffnung (8) im Reibbelag (9) hindurchgesteckt wird, die einen größeren Durchmesser als die zueinander angeordneten Öffnungen (6, 11) aufweist,
**dadurch gekennzeichnet, dass** die Öffnung zur Aufnahme der Fassung in der Grundplatte ein Sackloch (6) ist, welches sich auf der Seite (2') der Grundplatte (2) in Richtung der Trägerplatte (10) öffnet,
wobei im Boden dieses Sacklochs eine Bohrung (15) mit einem kleineren Durchmesser als dem des Sacklochs (6) vorgesehen ist, wobei diese Bohnrung (15) durch die Hauptplatte (2) geführt ist, sodass sie sich auf der Seite (2") der Platte gegenüber der Trägerplatte öffnet, wobei in diese Bohrung innerhalb der Buchse (7) ein Niet (16) eingeführt ist, der die Hauptplatte (2) und die Trägerplatte (10) verbindet.

2. Bremsbelagsatz nach Anspruch 1, **dadurch gekennzeichnet, dass** die Hülse (7) an einem ihrer Enden einen flanschartigen Rand (20) aufweist, der in der Öffnung (8) des Reibbelags (9) an der Trägerplatte einliegt, wenn die Buchse (7) in das Sackloch (6) der Hauptplatte (2) eingesetzt wird, wobei der vom Flansch (20) umgebene Durchmesser größer ist als der Innendurchmesser der Buchse (7), sodass zwischen dem Flansch (20) und der Hülse (7) ein Absatz (19) entsteht, der den Anschlag für den Schließkopf (18) des Niets (16) bildet, während der Montagekopf (17) des Niets (16) in die Grundplatte (2) eingepresst wird.

3. Bremsbelaganordnung nach Anspruch 1 oder 2, **dadurch gekennzeichnet, dass** die Grundplatte (2) auf der dem Reibbelag (9) gegenüberliegenden Seite mittels mindestens einer Niete (5) auf Höhe eines Führungelementes (4) befestigt ist, das als Schwalbenschwanz ausgebildet ist und dazu bestimmt ist, in die Halterung des Bremsbelagsatzes eingeführt zu werden.

4. Bremsbelagsatz nach einem der Ansprüche 1 bis 3, **dadurch gekennzeichnet, dass** im Abstand von der die Hülse (7) aufnehmenden Öffnung (11) in der Trägerplatte (10) eine weitere Öffnung (23) vorgesehen ist, die zur Aufnahme einer Klemmstange (21) dient, die in eine der Trägerplattenöffnung (23) gegenüberliegenden Öffnung (22) in der Grundplatte (2) eintaucht.

5. Bremsbelagsatz nach einem der Ansprüche 1 bis 4, **dadurch gekennzeichnet, dass** die Membran (14) mit ihrem größeren Umfangsrand auf der Hauptplatte (2) aufliegt und dass der kleinere Umfangsrand auf einer ringförmigen Schulter (13) aufliegt, die in der Trägerplatte (10) ausgebildet ist, die die Buchsenöffnung konzentrisch umgibt und von dieser von der Schuler ausgehend radial geführt ist.

6. Bremsbelagsatz nach einem der Ansprüche 1 bis 5, **dadurch gekennzeichnet, dass** jedes Belagmodul (3) relativ zur Hauptplatte (2) in einer Richtung senkrecht zur Belaghauptebene (Z-Richtung) beweglich ist und beweglich in Bezug auf Neigung relativ zur X-Y-Ebene vorgesehen ist.

## Claims

1. Brake pad assembly (1) for disk brakes, in particular in rail vehicles, comprising a main plate (2), pad modules (3) attached to the plate, resting respectively on a diaphragm (14), which pad modules have a friction lining (9) and a backing plate (10), this friction lining being attached to the backing plate (10), means (16) for attaching a respective pad module (3) to the plate (2), a plurality of bushes (7), each attachment means being provided in a respective bush (7), which is inserted in the orifices (11, 6) provided facing each other in the backing plate (10) and in the main plate (2), through an opening (8) of the friction lining (9), which has a greater diameter than the orifices (6, 11) provided facing each other,
**characterized in that** the orifice for receiving the bush in the main plate is a blind hole (6), leading to the face (2') of the main plate (2) rotated towards the backing plate (10),
a bore (15) of a diameter smaller than that of the blind hole (6) being provided in the bottom of this blind hole, this bore (15) passing through the main plate (2), so as to lead to the face (2") of the plate which is opposite to the backing plate (10), a rivet (16) being inserted into this bore inside the bush (7), this rivet linking the main plate (2) and the backing plate (10) .

2. Brake pad assembly according to claim 1, **characterized in that** the bush (7) has, at one of the ends thereof, a flange-type edge (20), which rests, in the opening (8) of the friction lining (9), on the backing plate when the bush (7) is inserted into the blind hole (6) in the main plate (2), wherein the diameter surrounded by the flange (20) is greater than the inner diameter of the bush (7) such that is formed, between the flange (20) and the bush (7), a shoulder (19), which forms the stop for the closing head (18) of the rivet (16), while the head for positioning (17) the rivet (16) is located pressed into the main plate (2).

3. Brake pad assembly according to claim 1 or 2, **characterized in that** the main plate (2) is attached, at the opposite side of the friction lining (9), by means of at least one rivet (5), at a dovetailed guide element (4), configured to be inserted into the support of the brake pad assembly.

4. Brake pad assembly according to any one of claims 1 to 3, **characterized in that** is provided, remote from the orifice (11) receiving the bush (7), in the backing plate (10), another orifice (23) being used to receive a clamping rod (21), which is pressed into an orifice (22), provided facing the backing plate orifice (23), in the main plate (2).

5. Brake pad assembly according to any one of claims 1 to 4, **characterized in that** the diaphragm (14) rests, by the larger edge thereof on the periphery, on the main plate (2), and **in that** the smaller edge on the periphery bears on an annular-shaped shoulder (13) formed in the backing plate (10), concentrically surrounding the bush opening and is guided from said shoulder radially.

6. Brake pad assembly according to any one of claims 1 to 5, **characterized in that** each pad module (3) can be moved with respect to the main plate (2) in a perpendicular direction with respect to the main plate plane (direction Z) and is configured so that it can be moved by tilting with respect to the plane X-Y.
